# EUROPÄISCHE PATENTSCHRIFT

(11) **EP 3 936 742 B1**
(45) Veröffentlichungstag und Bekanntmachung des Hinweises auf die Patenterteilung: **16.08.2023**
(21) Anmeldenummer: 20185266.2
(22) Anmeldetag: 10.07.2020
(51) Int. Cl.: F16H 63/30, F16H 57/039, F16H 37/06

(54) **SCHALTEINRICHTUNG FÜR EIN GETRIEBE UND GETRIEBE MIT EINER SOLCHEN**
SWITCHING DEVICE FOR A GEARBOX AND GEARBOX WITH SAME
DISPOSITIF DE COMMUTATION POUR UNE BOÎTE DE VITESSES ET BOÎTE DE VITESSES DOTÉE D'UN TEL DISPOSITIF DE COMMUTATION

(43) Veröffentlichungstag der Anmeldung: 12.01.2022
(73) Patentinhaber: Deere & Company, Moline, IL 61265 (US)
(72) Erfinder: Perez, Javier Jose, 68163 Mannheim (DE); Vergara Martinez, Daniel, 68163 Mannheim (DE)
(74) Vertreter: Reichert, Christian

(56) Entgegenhaltungen:
- CN-A- 102 537 332
- CN-U- 208 348 473
- FR-A1- 2 912 795
- US-A- 2 092 580
- US-A- 2 605 749
- US-B2- 8 752 443

## Beschreibung

Die Erfindung betrifft ein Getriebe mit einer Schalteinrichtung, mit einem ersten und einem zweiten Getriebegehäuseteil. Die Schalteinrichtung umfasst, eine Schaltmuffe, eine in die Schaltmuffe eingreifende Schaltgabel, einen im ersten Getriebegehäuseteil angeordneten Stellaktor und eine einenends mit dem Stellaktor und anderenends mit der Schaltgabel verbundene Stellstange, wobei die Stellstange in einer im ersten Getriebegehäuseteil ausgebildeten ersten Führungsbohrung gelagert ist.

Derartige Getriebe sind bekannt und werden beispielsweise in landwirtschaftlichen Fahrzeugen eingesetzt, insbesondere in Traktoren oder Erntemaschinen, wie Mähdrescher oder Feldhäcksler.

Ein derartiges Getriebe mit einer Schalteinrichtung ist beispielsweise aus US 8 752 443 B2 bekannt, in der ein erstes und ein zweites Zahnrad wahlweise über eine Synchronisiereinrichtung mit einer Welle verbunden werden können. Die Schalteinrichtung umfasst einen hydraulischen Aktuator, eine mit diesem verbundene Schaltgabel, eine Führungsstange, die für eine gemeinsame Bewegung mit der Schaltgabel angeordnet ist, einen Sperrmechanismus, der an einem ersten Ende der Führungsstange angeordnet ist, einem Stellungssensor, der mit einem zweiten Ende der Führungsstange in Kontakt steht, einem ersten und einem zweiten Drucksteuerventil, die mit dem hydraulischen Aktuator in Verbindung stehen und eine Steuereinheit, die in elektrischer Verbindung zu dem Stellungssensor und dem ersten und zweiten Drucksteuerventil steht, wobei die Steuereinheit einen Steueralgorithmus umfasst. Weitere hydraulisch gesteuerte Schalteinrichtungen eines Getriebes sind beispielsweise auch aus US 2 605 749 A oder US 2 092 580 A bekannt, in denen ebenfalls Führungsstangen zur Führung einer Schaltgabel vorgesehen sind. Die in den genannten Schalteinrichtungen angeordneten Schaltmechanismen, insbesondere die dort vorgesehenen Schaltgabeln, sind relativ hohen Biegebelastungen ausgesetzt und weisen einen relativ großen Bauraum auf.

Insbesondere bei den genannten Mähdreschern werden Getriebe mit einer oben genannten Schalteinrichtung versehen, um die Abtriebsdrehrichtung des Getriebes von einer ersten Drehrichtung in eine reversierte zweite Drehrichtung umschalten zu können. So werden derartige Schalteinrichtungen mit reversierbarer Drehrichtung (Antriebsrichtung) beispielsweise in "John Deere" Mähdreschern der Serie S700 eingesetzt. Die reversierte Drehrichtung, also eine Antriebsumkehr, ist grundsätzlich nur im speziellen Bedarfsfall einzustellen, beispielsweise bei Verstopfungen im Erntevorsatz und/oder am Erntegutförderer im Förderkanal des Mähdreschers. Die Schalteinrichtungen sehen in der Regel vor, dass eine Schaltmuffe mit einer Schaltgabel in Verbindung steht, welche über einen hydraulisch ansteuerbaren Stellzylinder verschiebbar ist. Die Schaltgabel wird dazu auf einer mit dem Stellzylinder in Verbindung stehenden Stellstange befestigt, welche in gegenüber liegenden Gehäusehälften der Schalteinrichtung angeordnete Führungsbohrungen axial verschiebbar gelagert ist. Um ein auf die Stellstange wirkendes Schaltmoment beim Verschieben der Schaltmuffe zu minimieren, ist die Schaltgabel zwischen den Führungsbohrungen angeordnet. Diese Art der Anordnung von Schaltgabel, Stellstange und Führungsbohrungen in beiden Gehäusehälften geht zu Lasten der Kompaktheit der Schalteinrichtung und erfordert einen relativ großen Bauraum. Zudem ist die Schaltgabel in der Regel nur an einem äußeren Punkt and der Schaltgabel mit der Stellstange verbunden, wodurch ein relativ großes Biegemoment auf die Schaltgabel und auf die Stellstange wirkt, wenn die erforderliche Stellkraft zum Verschieben der Schaltmuffe aufzubringen ist. Ferner kann die Schaltgabel aufgrund der nur punktuellen Verbindung auch gegenüber der Stellstange ein gewisses Rotationsspiel aufweisen, wodurch die Gabelschenkel der Schaltgabel die Schaltmuffe nachteilig radial belasten können, was unter anderem zu Reibungsverlusten führt.

Die der Erfindung zugrunde liegende Aufgabe wird darin gesehen, ein Getriebe mit einer Schalteinrichtung vorzuschlagen, durch welche die vorgenannten Nachteile überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Es wird vorgeschlagen, ein Getriebe der eingangs genannten Art derart auszubilden, dass eine im ersten Getriebegehäuseteil parallel zur ersten Führungsbohrung ausgebildete zweite Führungsbohrung angeordnet ist und eine parallel zur Stellstange ausgerichtete Führungsstange vorgesehen ist, die einenends mit der Schaltgabel verbunden und anderenends in der zweiten Führungsbohrung gelagert ist. Diese Anordnung eignet sich insbesondere für eine Getriebeeinrichtung mit kleinem Bauraum, in der eine Anordnung der zweiten Führungsbohrung für die Stellstange im zweiten Getriebegehäuseteil gegenüberliegend zur ersten Führungsbohrung im ersten Getriebegehäuseteil zu Lasten der Kompaktheit des Getriebes gehen würde. Durch die Anordnung der zweiten Führungsbohrung für die Stellstange parallel zur ersten Führungsbohrung und die Anordnung einer in der zweiten Führungsbohrung gelagerten Führungsstange wird die Anordnung einer Führungsbohrung für die Stellstange im zweiten Getriebegehäuseteil vermieden. Das erste Getriebegehäuseteil bleibt nahezu in seiner Bautiefe unverändert hingegen das zweite Getriebegehäuseteil mit einer geringeren Bautiefe ausgebildet werden kann, wodurch insgesamt ein geringerer Bauraum erzielt werden kann. Zudem wird die Schaltgabel dadurch sowohl von der Stellstange als auch von der Führungsstange gestützt, so dass die Schaltgabel konzentrisch zur Schaltmuffe gehalten wird und ein Rotationsspiel der Schaltgabel gegenüber der Stellstange und damit verbundene Reibverluste zwischen Schaltgabel und Schaltmuffe vermieden werden. Der Verschleiß an Schaltgabel und Schaltmuffe wird dadurch reduziert. Ferner wird durch einen zusätzlichen Verbindungspunkt von Schaltgabel und Führungsstange, welcher für die Schaltgabel einen Stützpunkt gegenüber der Stellstange darstellt, das beim Verschieben der Schaltmuffe auf die Schaltgabel und auf die Stellstange wirkende Biegemoment minimiert und dadurch der Schaltvorgang erleichtert.

Die erste Führungsbohrung ist vorzugsweise zwischen dem Stellaktor und der Schaltgabel ausgebildet. Dadurch kann die Führungsbohrung bautechnisch vorteilhaft als integraler Bestandteil des ersten Getriebegehäuseteils ausgebildet sein.

Um eine Schaltstellung in eine Vorzugsrichtung zu gewährleisten, kann wenigstens ein erstes Federelement vorgesehen sein, welches die Schaltgabel in die entsprechende Vorzugsrichtung drängt. Sollte eine an der Stellstange durch den Stellaktor aufgebrachte Stellkraft ausfallen, beispielsweise wegen Ausfall oder wegen eines Defektes am Stellaktors, so wird die Schaltgabel durch die vom Federelement aufgebrachte Stellkraft in die Vorzugsrichtung gedrängt und in der entsprechenden Schaltstellung, die sich in der gegebenen Vorzugsrichtung einstellt, gehalten. Der Stellaktor kann beispielsweise als hydraulisch betätigter Stellzylinder ausgebildet sein, mit einem mit der Stellstange verbundenen Stellkolben. Bei Ausfall der Hydraulik würde die von dem Stellaktor aufzubringende Stellkraft ausfallen, so dass die von dem Federelement aufgebrachte Kraft als einzige Stellkraft in Vorzugsrichtung dient. Alternativ könnte der Stellaktor auch elektrisch betrieben werden, wobei dann bei Ausfall der Elektrik seitens des Stellaktors keine Stellkraft auf die Stellstange ausgeübt wird und auch hier die von dem Federelement aufgebrachte Kraft als einzige Stellkraft in Vorzugsrichtung dient. Die Vorzugsrichtung kann beispielsweise die Schaltrichtung sein, in die die Schaltmuffe bewegt werden muss, um einen Erntevorsatz zur Aufnahme von Erntegut zu betreiben. Die der Vorzugsrichtung entgegengesetzte Schaltrichtung kann dann beispielsweise eine Schaltrichtung sein, in die die Schaltmuffe bewegt werden muss, um eine Antriebsumkehr mit reversierte

Drehrichtung zu erzielen, beispielsweise im Falle einer Verstopfung oder Blockierung von Erntevorsatz und/oder Erntegutförderer im Förderkanal des Mähdreschers Das Federelement ist vorzugsweise zwischen dem ersten Getriebegehäuseteil und der Schaltgabel angeordnet. Alternativ könnte das Federelement jedoch auch im Stellaktor angeordnet sein und beispielsweise eine Stellkraft auf den Stellkolben ausüben. Bei Ausfall der Hydraulik oder Elektrik würde eine Stellkraft in Vorzugsrichtung ausgehend vom Federelement am Stellkolben erhalten bleiben.

Vorzugsweise ist das Federelement als Druckfeder ausgebildet und erstreckt sich zumindest teilweise in eine im ersten Getriebegehäuseteil parallel zur ersten und zweiten Führungsbohrung ausgebildete Federführungsbohrung. Die Druckfedern üben eine Stellkraft auf die Schaltgabel aus, durch welche die Schaltgabel in Richtung des zweiten Getriebegehäuseteils bewegt bzw. gedrängt wird. Die Federführungsbohrung dient zum einen als Knickschutz für eine beispielsweise als Spiralfeder ausgebildete Druckfeder zum anderen aber auch als Montagehilfe, da das Einsetzen und Montieren des Federelements erleichtert wird.

Neben dem einen oder ersten Federelement kann auch ein zweites oder weiteres Federelement vorgesehen sein. Je nach Bauraum und benötigter Stellkraft, kann die Anzahl und die Dimension der Federelemente variieren, wobei der Bauraum zwischen Schaltgabel und erstem Getriebegehäuseteil die Anordnung von mehreren Federlementen vorteilhaft zulässt. Dies hat den Vorteil, dass die von den Federelementen ausgehende Stellkraft sehr variabel gestaltet werden kann. Die sonst übliche Anordnung von Federelementen zur Erzeugung einer Stellkraft in Vorzugsrichtung erfolgt im Stellaktor selbst, beispielsweise durch eine in einer Hydraulikkammer des Stellkolbens angeordnete Druckfeder. Diese Art der Anordnung ist jedoch durch die Bauart und Baugröße des Stellaktors beschränkt. Vorzugsweise sind beidseitig der Führungsstange die gleiche Anzahl von Federelementen vorgesehen, um eine Drehmomentwirkung auf die Führungsstange und auf die Stellstange zu vermeiden. In einem bevorzugten Ausführungsbeispiel sind zwei als Spiralfedern ausgebildete Druckfedern angeordnet, die an beiden Seiten der Führungsstange angeordnet sind. Die Federführungsbohrungen erstrecken sich im ersten Getriebegehäuseteil parallel zu der zweiten Führungsbohrung. Die Druckfedern und die Federführungsbohrungen sind so angeordnet, dass die Druckfedern an beiden Seiten der Schaltgabel angreifen. Die Druckfedern sind dabei so dimensioniert, dass, bei nicht vorhandener oder deaktivierter Stellkraft seitens des hydraulisch betriebenen Stellaktors, durch die Druckfedern insgesamt noch eine ausreichend große Stellkraft auf die Schaltgabel aufgebracht wird, so dass die Schaltgabel und die Schaltmuffe in die Vorzugsrichtung bewegt und die Schaltmuffe in der bevorzugten Schaltstellung gehalten werden kann. Dadurch wird gewährleistet, dass die Antriebsverbindung zum Erntevorsatz erhalten bleibt und der Benutzer auch bei Ausfall der Hydraulik seine Erntearbeiten nicht unterbrechen muss bzw. diese fortführen kann

Vorzugsweise sind der erste und der zweite Getriebegehäuseteils des erfindungsgemäßen Getriebes miteinander verbunden. Durch das erste und zweite Getriebegehäuseteil erstreckt sich bei dieser Ausgestaltung eine Abtriebswelle. Ein erstes Antriebselement für das Getriebe ist über einen Planetengetriebesatz mit der Abtriebswelle verbindbar. Ferner ist ein zweites Antriebselement mit der Abtriebswelle verbindbar. Das Getriebe weist bei dieser Ausgestaltung ferner ein mit der Abtriebswelle drehfest verbundenes Zahnrad auf, welches mit einer Schaltmuffe in Eingriff steht. In einer ersten Schaltstellung wird die Schaltmuffe mit dem Planetengetriebesatz und dem Zahnrad und in einer zweiten Schaltstellung wird die Schaltmuffe mit dem zweiten Antriebselement und dem Zahnrad in Eingriff gebracht.

Vorzugsweise ist die erste Schaltstellung, in der die Schaltmuffe mit dem Planetengetriebesatz in Eingriff gebracht wird, die Schaltstellung in Vorzugsrichtung bzw. die Schaltstellung für den Normalbetrieb des Mähdreschers.

Der Planetengetriebesatz kann dabei ein am zweiten Getriebegehäuseteil angeordnetes Hohlrad, einen sich im Hohlrad wälzenden Planetensatz, einen mit der Schaltmuffe in der ersten Schaltstellung in Eingriff bringbaren Planetenträger und ein mit dem ersten Antriebselement verbundenes und mit den Planetenrädern wälzendes Sonnenrad umfassen.

Ausgehend vom ersten Antriebselement erfolgt in der ersten Schaltstellung der Antriebsfluss somit über das Sonnenrad und über die im Hohlrad wälzenden Planeten auf den Planetenträger, und von dort über die Schaltmuffe auf das Zahnrad der Abtriebswelle. Ausgehend vom zweiten Antriebselement erfolgt in einer zweiten Schaltstellung der Antriebsfluss über die Schaltmuffe auf das Zahnrad der Abtriebswelle. Die Drehrichtung der Antriebswelle in der ersten Schaltstellung ist entgegengesetzt zur Drehrichtung der Antriebswelle in der zweiten Schaltstellung, in der das Getriebe im Reversierbetrieb betrieben wird, wenn zum Beispiel der Erntevorsatz und/oder der Erntegutförderer im Förderkanal des Mähdreschers verstopft oder blockiert ist.

Das erste Antriebselement dient dem Normalbetrieb der Erntemaschine mit einer ersten Drehrichtung, in welcher der Erntevorsatz und der Erntegutförderer zum Einholen des Ernteguts betrieben werden. Das erste Antriebselement kann dabei als Riementriebtrommel ausgebildet sein, die über eine Flanschverbindung mit dem Sonnenrad verbunden ist. Vorzugsweise ist die Riementriebtrommel derart bemessen und ausgebildet, dass das Getriebe als solches im Wesentlichen in einem von der Riementriebscheibe umgebenen Hohlraum Platz findet.

Das zweite Antriebselement dient dem Reversierbetrieb der Erntemaschine mit einer zweiten, entgegengesetzten Drehrichtung, in welcher der Erntevorsatz und der Erntegutförderer in umgekehrter Richtung betrieben werden, um beispielsweise eine Blockade oder Verstopfung am Erntevorsatz und/oder am Erntegutförderer aufzuhebenden. Das zweite Antriebselement kann dabei als Schneckenrad ausgebildet sein und steht mit einer Getriebeschnecke in Verbindung. Alternativ könnte hier auch eine andere Antriebsart gewählt werden, die im Reversierbetrieb eingesetzt wird, beispielsweise auch ein Stirnradgetriebe, Hypoidgetriebe, Kegelradgetriebe und dergleichen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
Fig. 1 eine schematische Seitenansicht einer Erntemaschine in Form eines Mähdreschers mit einem Erntevorsatz und Einzugsvorrichtung an einem Förderkanal.
Fig. 2 eine schematische perspektivische Seitenansicht des Förderkanals aus Figur 1 mit einem Riementrieb, Erntegutförderer und einem erfindungsgemäßen Getriebe für den Antrieb des Erntevorsatzes und des Erntegutförderers.
Fig. 3 eine vergrößerte perspektivische Vorderseitenansicht des
   erfindungsgemäßen Getriebes aus Figur 1 und 2,
Fig. 4 eine vergrößerte perspektivische Rückseitenansicht des
   erfindungsgemäßen Getriebes aus Figur 1 und 2,
Fig. 5 eine vergrößerte Querschnittsansicht des erfindungsgemäßen Getriebes aus Figur 1 und 2 in einer ersten Querschnittsebene für eine erste Schaltstellung,
Fig. 6 eine vergrößerte Querschnittsansicht des erfindungsgemäßen Getriebes aus Figur 1 und 2 in der ersten Querschnittsebene für eine zweite Schaltstellung,
Fig. 7 eine weitere vergrößerte Querschnittsansicht des erfindungsgemäßen Getriebes aus Figur 1 und 2 in einer zweiten Querschnittsebene,
Fig. 8 eine perspektivische Querschnittsansicht des erfindungsgemäßen Getriebes aus Figur 1 und 2 in einer dritten Querschnittsebene für die erste Schaltstellung,

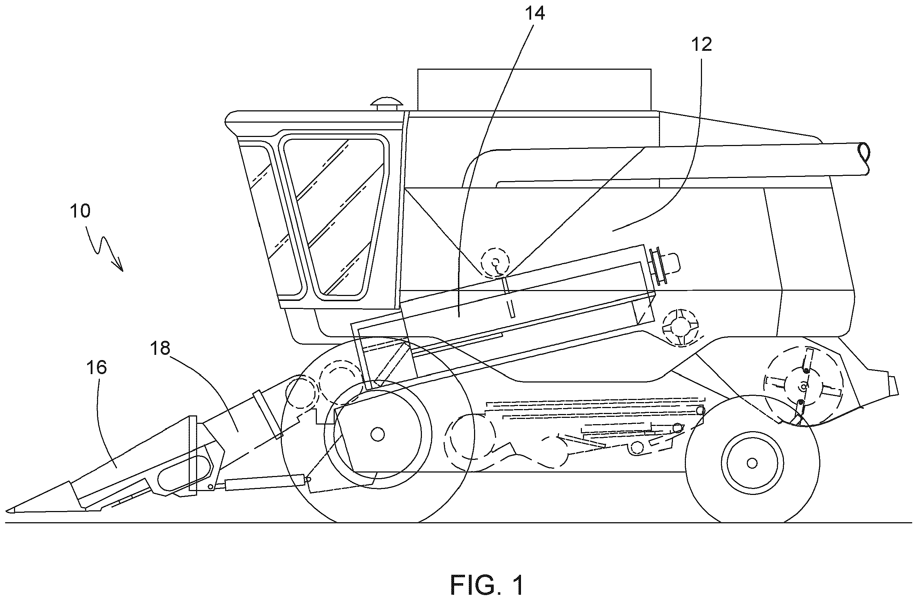

Figur 1 zeigt eine selbstfahrende landwirtschaftliche Maschine 10, die beispielhaft in Form eines Mähdreschers ausgebildet ist. Denkbar ist durchaus auch, dass das im Folgenden weiter beschriebene Ausführungsbeispiel auch an einer andersartigen selbstfahrenden landwirtschaftlichen Maschine, beispielsweise einem Feldhäcksler, einer Mähmaschine, einem Zuckerrohrernter oder einer Ballenpresse ausgebildet sein kann.

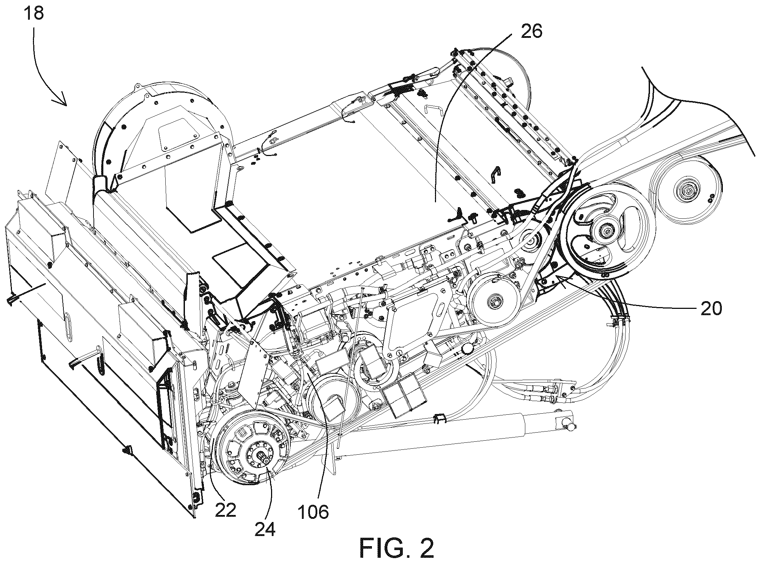

Die landwirtschaftliche Maschine 10 weist ein Maschinengehäuse 12 und Bearbeitungseinrichtung in Form einer Drescheinrichtung 14 mit einem in Längsrichtung der landwirtschaftlichen Maschine 10 ausgerichteten Axialrotor auf. Die landwirtschaftliche Maschine 10 ist ferner mit einem Erntevorsatz 16 versehen, der mit einem Förderkanal 18 (siehe auch Figur 2) verbunden ist. Die landwirtschaftliche Maschine 10 wird von einem (nicht dargestellten) Verbrennungsmotor angetrieben, von dem unter anderem auch ein am Förderkanal 18 angeordneter Riementrieb 20 abgezweigt ist. Über den Riementrieb 20 wird ein erstes Antriebselement 22 in Form einer Riementriebtrommel angetrieben, die als Antriebselement für ein Getriebe 24 zum Antrieb des Erntevorsatzes 16 und zum Antrieb eines im Förderkanal angeordneten Erntegutförderers 26 im Normalbetrieb dient.

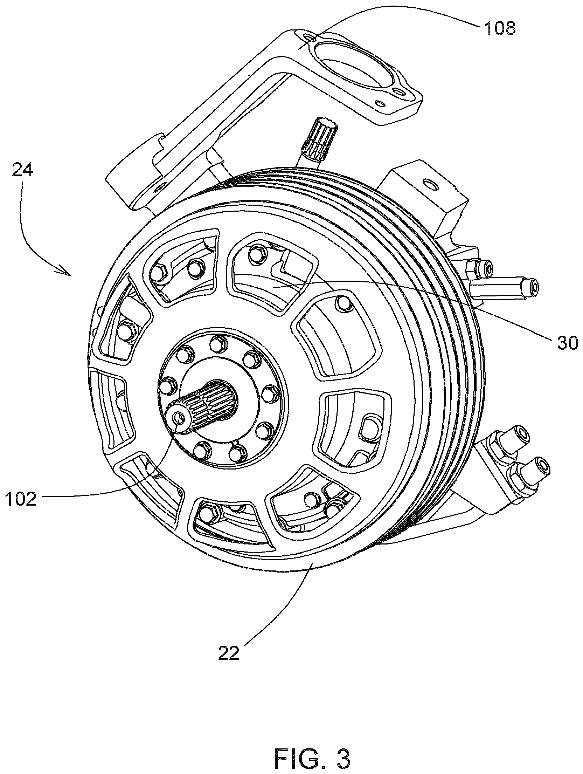

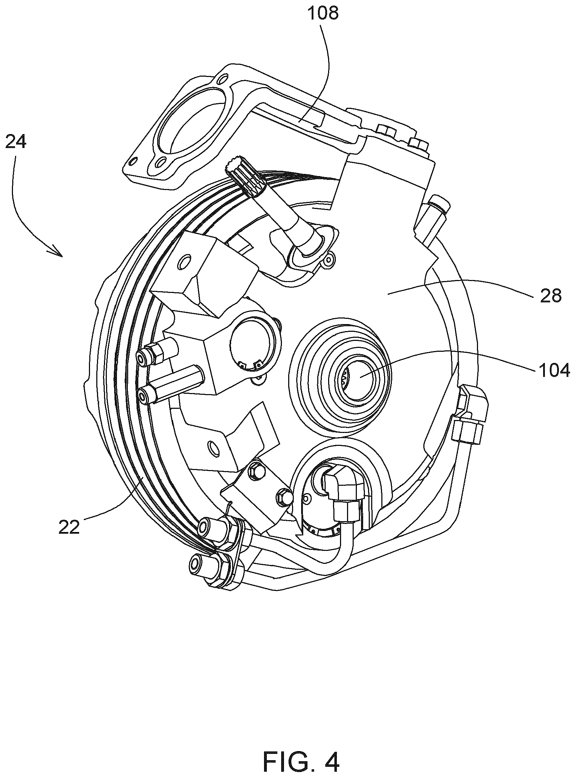

Das erfindungsgemäße Getriebe 24 ist detailliert in den Figuren 3 bis 8 dargestellt und umfasst, neben dem als Riementriebtrommel ausgebildeten ersten Antriebselement 22, einen ersten Getriebegehäuseteil 28 und einen zweiten Getriebegehäuseteil 30. Im zweiten Getriebegehäuseteil 30 ist ein zylindrischer Rotationskörper 32, über ein Kugellager 34 gelagert, angeordnet. Der Rotationskörper 32 ist an einem ersten Ende 36 mit dem ersten Antriebselement 22 (Riementriebtrommel) verschraubt und drehfest verbunden. An einem zweiten Ende 38 des Rotationskörpers 32 ist ein Sonnenrad 40 eines Planetengetriebesatzes 42 drehfest mit dem Rotationskörper 32 verbunden. Das Sonnenrad 40 steht mit einem Planetensatz 44 des Planetengetriebesatzes 42 in Eingriff. Der Planetensatz wälzt in einem am zweiten Getriebegehäuseteil 30 eingebetteten Hohlrad 46. Der Planetensatz 44 ist an einem Planetenträger 48 gelagert der mit einer Schalteinrichtung 50 in Eingriff bringbar ist.

Die Schalteinrichtung 50 umfasst unter anderem eine Schaltmuffe 52, eine in die Schaltmuffe 52 eingreifende Schaltgabel 54, einen im ersten Getriebegehäuseteil 28 angeordneten Stellaktor 56 und eine einenends mit dem Stellaktor 56 und anderenends mit der Schaltgabel 54 verbundene Stellstange 58, wobei die Stellstange in einer im ersten Getriebegehäuseteil 28 ausgebildeten ersten Führungsbohrung 60 gelagert ist. Ferner ist im ersten Getriebegehäuseteil 28 parallel zur ersten Führungsbohrung 60 eine zweite Führungsbohrung 62 ausgebildet. In der zweiten Führungsbohrung 62 ist, parallel zur Stellstange 58 angeordnet, eine Führungsstange 63 vorgesehen, die ebenfalls einenends mit der Schaltgabel 54 verbunden und anderenends in der zweiten Führungsbohrung 62 gelagert ist.

Die oben beschriebene Anordnung der Schalteinrichtung 50 eignet sich insbesondere für ein Getriebe 24 mit kleinem Bauraum und kompakter Bauweise, in der eine Anordnung der zweiten Führungsbohrung 62 für die Stellstange 58 ebenfalls im ersten Getriebegehäuseteil 28 ausgebildet ist. Durch die Anordnung der zweiten Führungsbohrung 62 für die Stellstange 58 parallel zur ersten Führungsbohrung 60 in Verbindung mit der in der zweiten Führungsbohrung 62 gelagerten Führungsstange 63 wird die Anordnung einer zweiten Führungsbohrung für die Stellstange 58 im zweiten Getriebegehäuseteil 30 vermieden. Das erste Getriebegehäuseteil 28 bleibt trotdem nahezu in seiner Bautiefe unverändert hingegen das zweite Getriebegehäuseteil 30 mit einer relativ geringen Bautiefe ausgebildet werden kann, wodurch insgesamt ein geringer Bauraum erzielt wird. Zudem wird die Schaltgabel 54 sowohl von der Stellstange 58 als auch von der Führungsstange 63 gestützt, so dass die Schaltgabel 54 konzentrisch zur Schaltmuffe 52 gehalten wird und ein Rotationsspiel der Schaltgabel 54 gegenüber der Stellstange 58 und damit verbundene Reibverluste zwischen Schaltgabel 54 und Schaltmuffe 52 vermieden werden. Der Verschleiß an Schaltgabel 54 und Schaltmuffe 52 wird dadurch reduziert. Ferner wird durch die Verbindung der Führungsstange 63 mit der Schaltgabel 54 ein Stützpunkt gegenüber der Stellstange 58 geschaffen, der ein beim Verschieben der Schaltmuffe 52 auf die Schaltgabel 54 und auf die Stellstange 58 wirkendes Biegemoment minimiert und dadurch einen Schaltvorgang erleichtert.

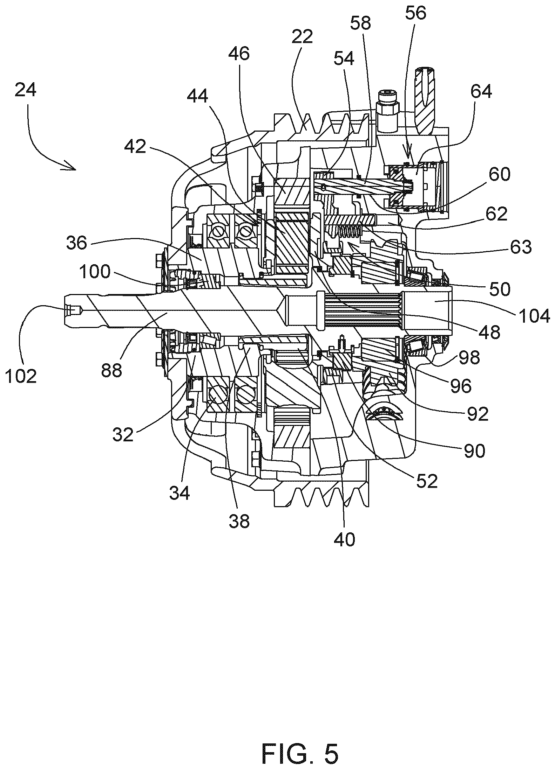

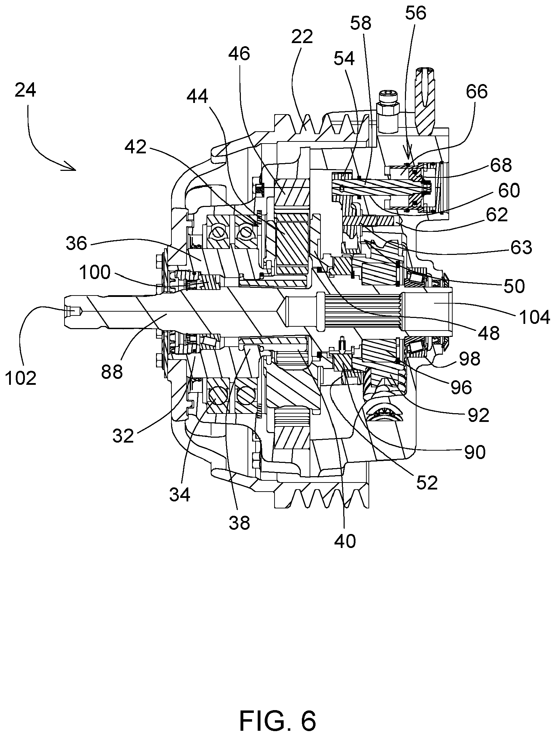

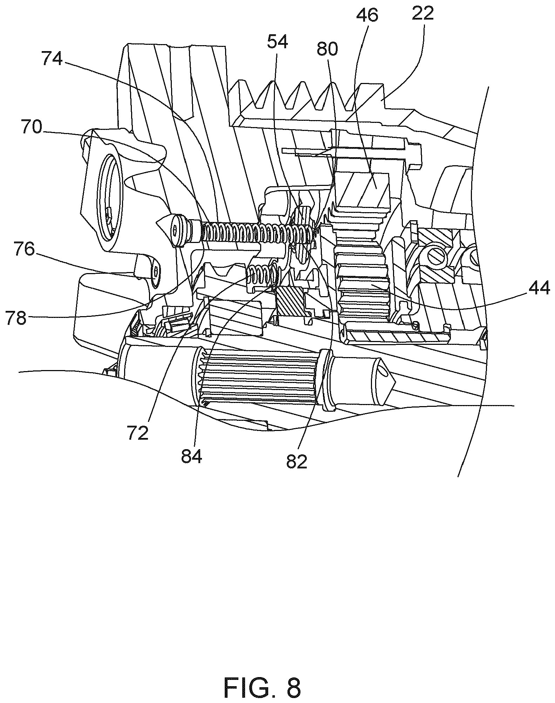

Der Stellaktor 56 ist als doppeltwirkender Hydraulikzylinder mit einer ersten und einer zweiten Druckkammer 64, 66, die von einem Stellkolben 68 voneinander getrennt sind, ausgebildet. Die erste Druckkammer 64 ist in Bezug auf eine in den Figuren 5 und 6 dargestellte Getriebeansicht linksseitig des Stellkolbens 68 ausgebildet. Die zweite Druckkammer 66 ist in Bezug auf eine in den Figuren 5 und 6 dargestellte Getriebeansicht rechtsseitig des Stellkolbens 68 ausgebildet. Der Stellkolben 68 ist mit der Stellstange 58 verbunden. Je nach Befüllen der ersten oder zweiten Druckkammer 64, 66 bewegt sich der Stellkolben 68 in eine erste Schaltstellung (siehe Figur 5 und 8) oder in eine zweite Schaltstellung (siehe Figur 6).

Wie in Figur 8 dargestellt, ist im ersten Getriebegehäuseteil 28 seitlich der Führungsstange 63 ein jeweils als Druckfeder ausgebildetes erstes und zweites Federelement 70, 72 angeordnet. Zur Führung und Halterung der Federelemente 70, 72 ist im ersten Getriebegehäuseteil 28 eine erste und eine zweite Federführungsbohrung 74, 76 angeordnet, in die sich die jeweiligen Federelemente 70, 72 teilweise erstrecken. Die Federelemente 70, 72 sind an einem ersten Federende 78 in der jeweiligen Federführungsbohrung 74, 76 und an einem zweiten Federende 80 in einer jeweiligen an der Schaltgabel 54 angeordneten ersten und zweiten Eingriffsbohrung 82, 84 gehalten. Die Federelemente 70, 72 erstrecken sich somit zwischen ausgehend vom ersten Getriebegehäuseteil 28 in Richtung der Schaltgabel 54 und üben eine Spannkraft in Richtung des zweiten Getriebegehäuseteils 30 aus, wobei die Federelemente 70, 72 die Schaltgabel 54 in die erste Schaltstellung drängen bzw. bei drucklosen Druckkammern 64, 66 des Stellaktors 56 die Schaltgabel 54 und damit auch die Schaltmuffe 52 in der ersten Schaltstellung halten.

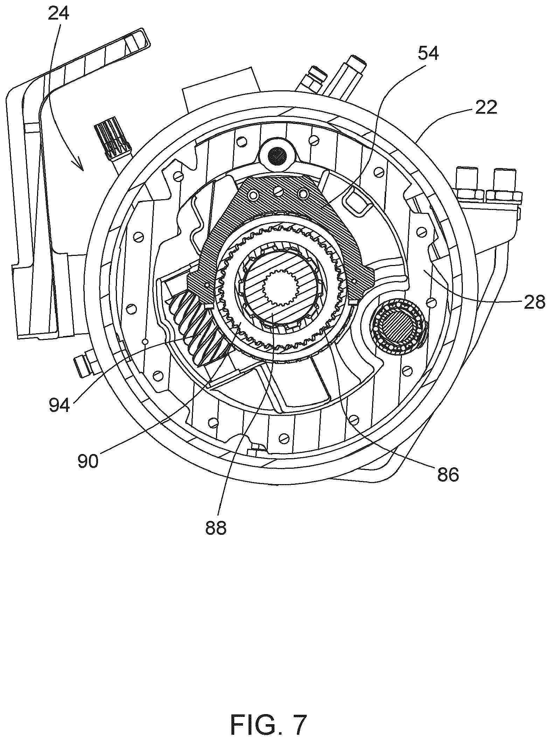

Die Schaltmuffe 52 weist eine Innenverzahnung 86 auf und ist mit dieser auf einem drehfest mit einer Abtriebswelle 88 verbundenem Zahnrad 90, axial zur Abtriebswelle 86 auf dem Zahnrad 90 verschiebbar, gelagert. Wie in Figur 5 und 8 ersichtlich, steht die Schaltmuffe 52 in der ersten Schaltstellung zur einen Hälfte mit dem Planetenträger 48 und zur anderen Hälfte mit dem Zahnrad 90 in Eingriff. Durch axiales Verschieben der Schaltmuffe 52 kann diese vom Eingriff mit dem Planetenträger 48 gelöst und in die zweite Schaltstellung gebracht werden, wie in Figur 6 dargestellt ist. In der zweiten Schaltstellung steht die Schaltmuffe 52 zur einen Hälfte mit einem auf der Abtriebswelle 88 angeordneten zweiten Antriebselement 94 in Form eines Schneckenrads (siehe auch Figur 7 und 8) und zur anderen Hälfte mit dem Zahnrad 90 in Eingriff. Das zweite Antriebselement 92 in Form des Schneckenrads steht mit einer Getriebeschnecke 94 in Antriebsverbindung und ist über ein Kugellager 96 auf der Abtriebswelle 88 gelagert.

Die Abtriebswelle 88 ist über ein erstes Wälzlager 98 am ersten Getriebegehäuseteil 28 und über ein zweites Wälzlager 100 am Rotationskörper 32 gelagert. Die Abtriebswelle 88 erstreckt sich in ihrer Länge durch den ersten und den zweiten Getriebegehäuseteil 28, 30 und weist einen ersten Abtriebsanschluss 102 am Ausgang des zweiten Getriebegehäuseteils 30 und einen zweiten Abtriebsanschluss 104 am Ausgang des ersten Getriebegehäuseteils 28 auf, wobei der erste Abtriebsanschluss 102 zum Anschluss an den Erntevorsatz 16 und der zweite Abtriebsanschluss 104 zum Anschluss an den Erntegutförderer 26 vorgesehen ist.

Wie in den Figuren ersichtlich, ist die Riementriebtrommel derart bauchig geformt, dass sie den zweiten Getriebegehäuseteil 30 vollständig und den ersten Getriebegehäuseteil wenigstens teilweise umschließt. Dadurch wird eine kompakte Bauweise des Getriebes 24 gewährleistet.

Der Antrieb des zweiten Antriebselementes 92 erfolgt über einen Elektromotor 106, der, der über eine am ersten Getriebegehäuseteil 28 angeordnete Halterung 108 gehaltert wird. Ein Antrieb des zweiten Antriebselements 92 über den Elektromotor erfolgt im Reversierbetrieb, beispielsweise wenn der Erntevorsatz oder der Erntegutförderer blockiert oder verstopft ist. Beim Reversierbetrieb wird die Schaltmuffe 52 in die zweite Schaltstellung gebracht bzw. mit dem Zahnrad 90 und dem zweiten Antriebselement 92 in Eingriff gebracht, wobei der Antrieb seitens des ersten Antriebselementes (Riementriebtrommel) entkoppelt und durch die oben beschriebene Anordnung der verschiedenen Getriebebauteile eine gegenüber dem Normalbetrieb entgegengesetzte Drehrichtung der Abtriebswelle 88 erzielt wird.

Die oben beschriebenen Federelemente 70, 72 dienen zur Sicherstellung einer Stellkraft in Vorzugsrichtung, welche eine Schaltstellung für den Normalbetrieb der landwirtschaftlichen Maschine 10 sicherstellt, wenn die hydraulische Versorgung des Stellaktors 56 ausfällt. Neben den dargestellten Federelementen 70, 72 können zur Realisierung einer größeren Stellkraft auch weitere Federelemente und entsprechende Federführungsbohrungen oder auch größer dimensionierte Federelemente und Federführungsbohrungen vorgesehen sein. Je nach Bauraum und benötigter Stellkraft, kann damit die Anzahl und die Dimension der Federelemente 70, 72 variieren. Die Federelemente 70, 72 und die Federführungsbohrungen 74, 76 sind so angeordnet, dass die Federelemente 70, 72 an beiden Seiten der Schaltgabel in den Eingriffsbohrungen 82, 84 unter Spannung angreifen. Die Federelemente 70, 72 sind dabei so dimensioniert, dass, bei nicht vorhandener oder deaktivierter Stellkraft seitens des hydraulisch betriebenen Stellaktors 56, durch die Federelemente 70, 72 insgesamt noch eine ausreichend große Stellkraft auf die Schaltgabel 54 aufgebracht wird, so dass die Schaltgabel 54 und die Schaltmuffe 52 in die Vorzugsrichtung bewegt und die Schaltmuffe 52 in der bevorzugten Schaltstellung (erste Schaltstellung) gehalten werden kann. Dadurch wird gewährleistet, dass die Antriebsverbindung zum Erntevorsatz 16 erhalten bleibt und der Benutzer auch bei Ausfall der Hydraulik seine Erntearbeiten nicht unterbrechen muss bzw. diese fortführen kann.

Im oben beschriebenen Ausführungsbeispiel ist die erste Schaltstellung, in der die Schaltmuffe 52 mit dem Planetengetriebesatz 42 in Eingriff gebracht wird, die Schaltstellung in Vorzugsrichtung bzw. die Schaltstellung für den Normalbetrieb der landwirtschaftlichen Maschine 10. Die zweite Schaltstellung, in der die Schaltmuffe 52 mit dem zweiten Antriebselement 92 in Eingriff gebracht wird stellt den Reversierbetrieb dar.

Ausgehend vom ersten Antriebselement 22 erfolgt in der ersten Schaltstellung der Antriebsfluss somit über das Sonnenrad 40 und über den im Hohlrad 46 wälzenden Planetensatz 44 auf den Planetenträger 48, und von dort über die Schaltmuffe 52 auf das Zahnrad 90 der Abtriebswelle 88. Ausgehend vom zweiten Antriebselement 92 erfolgt in der zweiten Schaltstellung der Antriebsfluss über die Schaltmuffe 52 auf das Zahnrad 90 der Abtriebswelle 88. Die Drehrichtung der Antriebswelle 88 in der ersten Schaltstellung ist entgegengesetzt zur Drehrichtung der Antriebswelle 88 in der zweiten Schaltstellung, in der das Getriebe im Reversierbetrieb betrieben wird, wenn zum Beispiel der Erntevorsatz und/oder der Erntegutförderer im Förderkanal des Mähdreschers verstopft oder blockiert ist.

Das Schalten der Schalteinrichtung 50 erfolgt durch hydraulische Druckbeaufschlagung und Druckentlastung der Druckkammern 64, 66, wobei bei Druckentlastung der zweiten Druckkammer 66 und/oder gegebenenfalls gleichzeitiger Druckbeaufschlagung der ersten Druckkammer 64 die Stellstange 58 und damit die Schaltgabel 54 und die Schaltmuffe 52 in Richtung der ersten Schaltstellung für den Normalbetrieb bewegt werden, in der die Schaltmuffe 52 mit dem Planetengetriebesatz 42 in Antriebsverbindung gebracht wird (siehe Figur 5). Bei Druckbeaufschlagung der zweiten Druckkammer 66 und/oder gegebenenfalls Druckentlastung der ersten Druckkammer 64 wird die Stellstange 58 und damit die Schaltgabel 54 und die Schaltmuffe 52 in Richtung der zweiten Schaltstellung für den Reversierbetrieb bewegt, in der die Schaltmuffe 52 mit dem zweiten Antriebselement 92 in Antriebsverbindung gebracht wird. Die Druckbeaufschlagung für die erste Druckkammer 64 kann gering ausfallen oder je nach Auslegung der Federelemente 70, 72 gänzlich wegfallen, da die Federelemente 70, 72 wie oben beschrieben, die Stellstange 58 bereits in die erste Schaltstellung drängen. Die Federelemente 70, 72 sind jedoch vorzugsweise derart ausgelegt, dass bei einem Ausfall der Hydraulik im Normalbetrieb lediglich ein selbsttätiges Verschieben der Schaltmuffe 52 aus der ersten Schaltstellung heraus vermieden wird, jedoch eine Druckbeaufschlagung der ersten Druckkammer 64 zum Schalten von der zweiten Schaltstellung in die erste Schaltstellung erfolgen soll. Dadurch soll eine gewisse Schaltdynamik sichergestellt werden. Die Druckbeaufschlagung für die zweite Druckkammer 66 zum Schalten in die zweite Schaltstellung muss hingegen größer ausfallen, da die Stellstange 58 gegen die Stellkraft der Federelemente 70, 72 bewegt werden muss.

## Patentansprüche

1. Getriebe (24) mit einer Schalteinrichtung (50), mit einem ersten und einem zweiten Getriebegehäuseteil (28, 30), wobei die Schalteinrichtung (50) eine Schaltmuffe (52), eine in die Schaltmuffe (52) eingreifende Schaltgabel (54), einen im ersten Getriebegehäuseteil (28) angeordneten Stellaktor (56) und eine einenends mit dem Stellaktor (56) und anderenends mit der Schaltgabel (54) verbundene Stellstange (58) umfasst, wobei die Stellstange (58) in einer im ersten Getriebegehäuseteil (28) ausgebildeten ersten Führungsbohrung (60) gelagert ist, **dadurch gekennzeichnet, dass** eine im ersten Getriebegehäuseteil (28) parallel zur ersten Führungsbohrung (60) ausgebildete zweite Führungsbohrung (62) ausgebildet ist und eine parallel zur Stellstange (58) ausgerichtete Führungsstange (63) vorgesehen ist, die einenends mit der Schaltgabel (54) verbunden und anderenends in der zweiten Führungsbohrung (62) gelagert ist.

2. Getriebe (24) nach Anspruch 1, **dadurch gekennzeichnet, dass** die erste Führungsbohrung (60) zwischen dem Stellaktor (56) und der Schaltgabel (54) ausgebildet ist.

3. Getriebe (24) nach Anspruch 1 oder 2, **dadurch gekennzeichnet, dass** wenigstens ein Federelement (70, 72) angeordnet ist, welches die Schaltgabel (54) in eine Schaltstellung einer Vorzugsrichtung drängt.

4. Getriebe (24) nach Anspruch 3, **dadurch gekennzeichnet, dass** das Federelement (70, 72) zwischen dem ersten Getriebegehäuseteil (28) und der Schaltgabel (54) angeordnet ist.

5. Getriebe (24) nach Anspruch 3 oder 4, **dadurch gekennzeichnet, dass** das Federelement (70, 72) als Druckfeder ausgebildet ist und sich in eine im ersten Getriebegehäuseteil (28) parallel zur ersten und zweiten Führungsbohrung (60, 62) ausgebildete Federführungsbohrung (74, 76) zumindest teilweise erstreckt.

6. Getriebe (24), **dadurch gekennzeichnet, dass** ein zweites Federelement (70, 72) nach einem der Ansprüche 3 bis 5 angeordnet ist.

7. Getriebe (24) nach einem der Ansprüche 1 bis 6, wobei der erste und der zweite Getriebegehäuseteil (28, 30) miteinander verbunden sind, einer sich durch das erste und zweite Getriebegehäuseteil (28, 30) erstreckenden Abtriebswelle (88), einem antriebsmäßig über einen Planetengetriebesatz (42) mit der Abtriebswelle (88) verbindbarem ersten Antriebselement (22), einem antriebsmäßig mit der Abtriebswelle (88) verbindbarem zweiten Antriebselement (92) und einem mit der Abtriebswelle (88) drehfest verbundenen und mit der Schaltmuffe (52) in Eingriff stehenden Zahnrad (90), wobei in einer ersten Schaltstellung die Schaltmuffe (52) mit dem Planetengetriebesatz (42) und dem Zahnrad (90) und in einer zweiten Schaltstellung die Schaltmuffe (52) mit dem zweiten Antriebselement (92) und dem Zahnrad (90) in Eingriff bringbar ist.

8. Getriebe (24) nach Anspruch 7 und 3, **dadurch gekennzeichnet, dass** die erste Schaltstellung die Schaltstellung in Vorzugsrichtung ist.

9. Getriebe (24) nach Anspruch 7 oder 8, wobei der Planetengetriebesatz (42) ein am zweiten Getriebegehäuseteil (30) angeordnetes Hohlrad (46), einen sich im Hohlrad (46) wälzenden Planetensatz (44), einen mit der Schaltmuffe (52) in der ersten Schaltstellung in Eingriff bringbaren Planetenträger (48) und ein mit dem ersten Antriebselement (22) verbundenes und mit den Planetensatz (44) wälzendes Sonnenrad (40) umfasst.

10. Getriebe (24) nach einem der Ansprüche 7 bis 9, wobei das erste Antriebselement (22) eine Riementriebtrommel umfasst.

11. Getriebe (24) nach einem der Ansprüche 7 bis 10, wobei das zweite Antriebselement (92) ein von einer Getriebeschnecke (94) angetriebenes Schneckenrad umfasst.

## Claims

1. Transmission (24) having a switching device (50), having a first and a second transmission housing portion (28, 30), wherein the switching device (50) comprises a shift collar (52), a shift fork (54) which engages in the shift collar (52), a control actuator (56) which is disposed in the first transmission housing portion (28) and an actuator rod (58) which is connected at one end to the control actuator (56) and at the other end to the shift fork (54), wherein the actuator rod (58) is supported in a first guiding bore (60) which is formed in the first transmission housing portion (28), **characterized in that** a second guiding bore (62) which is formed in the first transmission housing portion (28) parallel with the first guiding bore (60) is formed, and a guide rod (63) which is oriented parallel to the actuator rod (58) is provided and is connected at one end to the shift fork (54) and at the other end is supported in the second guiding bore (62).

2. Transmission (24) according to Claim 1, **characterized in that** the first guiding bore (60) is formed between the control actuator (56) and the shift fork (54).

3. Transmission (24) according to Claim 1 or 2, **characterized in that** there is disposed at least one resilient element (70, 72) which urges the shift fork (54) into a switching position of a preferred direction.

4. Transmission (24) according to Claim 3, **characterized in that** the resilient element (70, 72) is disposed between the first transmission housing portion (28) and the shift fork (54).

5. Transmission (24) according to Claim 3 or 4, **characterized in that** the resilient element (70, 72) is configured as a compression spring and extends at least partially in a spring guiding bore (74, 76) which is formed in the first transmission housing portion (28) parallel with the first and the second guiding bore (60, 62) .

6. Transmission (24) **characterized in that** there is disposed a second resilient element (70, 72) according to one of Claims 3 to 5.

7. Transmission (24) according to one of Claims 1 to 6, wherein the first and the second transmission housing portion (28, 30) are connected to one another, having an output shaft (88) which extends through the first and the second transmission housing portion (28, 30), a first drive element (22) which can be operatively connected by means of a planetary gear set (42) to the output shaft (88), a second drive element (92) which can be operatively connected to the output shaft (88), and a gear (90) which is connected in a rotationally fixed manner to the output shaft (88) and which is in engagement with the shift collar (52), wherein in a first switching position the shift collar (52) can be brought to engage with the planetary gear set (42) and the gear (90), and in a second switching position the shift collar (52) can be brought to engage with the second drive element (92) and the gear (90).

8. Transmission (24) according to Claim 7 and 3, **characterized in that** the first switching position is the switching position in a preferred direction.

9. Transmission (24) according to Claim 7 or 8, wherein the planetary gear set (42) comprises a ring gear (46) which is disposed on the second transmission housing portion (30), a planetary set (44) which rolls in the ring gear (46), a planetary carrier (48) which can be brought to engage with the shift collar (52) in the first switching position, and a sun gear (40) which is connected to the first drive element (22) and rolls with the planetary set (44).

10. Transmission (24) according to one of Claims 7 to 9, wherein the first drive element (22) comprises a belt drive drum.

11. Transmission (24) according to one of Claims 7 to 10, wherein the second drive element (92) comprises a worm gear which is driven by a gear worm (94).

## Revendications

1. Boîte de vitesses (24) avec un dispositif de commutation (50), avec une première et une deuxième partie de carter de boîte de vitesses (28, 30), le dispositif de commutation (50) comprenant un manchon de commutation (52), une fourchette de commutation (54) s'engageant dans le manchon de commutation (52), un actionneur de réglage (56) agencé dans la première partie de carter de boîte de vitesses (28) et une tige de réglage (58) reliée à une extrémité à l'actionneur de réglage (56) et à l'autre extrémité à la fourchette de commutation (54), la tige de réglage (58) étant montée dans un premier alésage de guidage (60) formé dans la première partie de carter de boîte de vitesses (28), **caractérisée en ce qu'**un deuxième alésage de guidage (62) formé dans la première partie de carter de boîte de vitesses (28) parallèlement au premier alésage de guidage (60) est formé et une tige de guidage (63) orientée parallèlement à la tige de réglage (58) est prévue, qui est reliée à une extrémité à la fourchette de commutation (54) et qui est montée à l'autre extrémité dans le deuxième alésage de guidage (62).

2. Boîte de vitesses (24) selon la revendication 1, **caractérisée en ce que** le premier alésage de guidage (60) est formé entre l'actionneur de réglage (56) et la fourchette de commutation (54).

3. Boîte de vitesses (24) selon la revendication 1 ou 2, **caractérisée en ce qu'**au moins un élément de ressort (70, 72) est agencé, lequel pousse la fourchette de commutation (54) dans une position de commutation d'une direction préférentielle.

4. Boîte de vitesses (24) selon la revendication 3, **caractérisée en ce que** l'élément de ressort (70, 72) est agencé entre la première partie de carter de boîte de vitesses (28) et la fourchette de commutation (54).

5. Boîte de vitesses (24) selon la revendication 3 ou 4, **caractérisée en ce que** l'élément de ressort (70, 72) est configuré sous forme de ressort de compression et s'étend au moins partiellement dans un alésage de guidage de ressort (74, 76) formé dans la première partie de carter de boîte de vitesses (28) parallèlement au premier et au deuxième alésage de guidage (60, 62).

6. Boîte de vitesses (24), **caractérisée en ce qu'**un deuxième élément de ressort (70, 72) est agencé selon l'une quelconque des revendications 3 à 5.

7. Boîte de vitesses (24) selon l'une quelconque des revendications 1 à 6, dans laquelle la première et la deuxième partie de carter de boîte de vitesses (28, 30) sont reliées l'une à l'autre, un arbre de sortie (88) s'étendant à travers la première et la deuxième partie de carter de boîte de vitesses (28, 30), un premier élément d'entraînement (22) pouvant être relié en entraînement à l'arbre de sortie (88) par l'intermédiaire d'un train d'engrenages planétaires (42), un deuxième élément d'entraînement (92) pouvant être relié en entraînement à l'arbre de sortie (88) et une roue dentée (90) reliée de manière solidaire en rotation à l'arbre de sortie (88) et en prise avec le manchon de commutation (52), le manchon de commutation (52) pouvant être mis en prise avec le train d'engrenages planétaires (42) et la roue dentée (90) dans une première position de commutation et le manchon de commutation (52) pouvant être mis en prise avec le deuxième élément d'entraînement (92) et la roue dentée (90) dans une deuxième position de commutation.

8. Boîte de vitesses (24) selon les revendications 7 et 3, **caractérisée en ce que** la première position de commutation est la position de commutation dans la direction préférentielle.

9. Boîte de vitesses (24) selon la revendication 7 ou 8, dans laquelle le train d'engrenages planétaires (42) comprend une couronne (46) agencée sur la deuxième partie de carter de boîte de vitesses (30), un train planétaire (44) roulant dans la couronne (46), un porte-satellites (48) pouvant être mis en prise avec le manchon de commutation (52) dans la première position de commutation et une roue solaire (40) reliée au premier élément d'entraînement (22) et roulant avec le train planétaire (44) .

10. Boîte de vitesses (24) selon l'une quelconque des revendications 7 à 9, dans laquelle le premier élément d'entraînement (22) comprend un tambour d'entraînement à courroie.

11. Boîte de vitesses (24) selon l'une quelconque des revendications 7 à 10, dans laquelle le deuxième élément d'entraînement (92) comprend une roue à vis sans fin entraînée par une vis sans fin de transmission (94).
